# EUROPEAN PATENT APPLICATION

(11) **EP 1 820 946 A2**
(43) Date of publication of application: **22.08.2007**
(21) Application number: 07250020.0
(22) Date of filing: 04.01.2007
(51) Int. Cl.: F01N 3/022, B01D 46/24

(54) **Honeycomb filter**

(30) Priority: 17.02.2006 JP 2006040733
(71) Applicant: NGK INSULATORS, LTD., Nagoya-city, Aichi 467-8530 (JP)
(72) Inventor: Mizutani, Takashi c/o Legal Affairs and I.P. Dept., Nagoya City Aichi-ken 467-8530 (JP)
(74) Representative: Paget, Hugh Charles Edward

(57) **Abstract**

A honeycomb filter 1 includes: partition walls separating and forming a plurality of cells extending in a direction of a central axis 21, and a catalyst loaded on the partition wall. A region (central unloaded portion) 4 from one end portion (outlet side end portion) 12 in the direction of the central axis to at least 1/2 of length in the direction of the central axis in a central portion 2 including the central axis 21 and excluding an outer periphery 22 is a catalyst-unloaded region, a region (outer peripheral unloaded portion) 5 from the outlet side end portion 12 to 2/3 or less of length in the direction of the central axis in the central unloaded portion 4 is a catalyst-unloaded region, and a portion excluding the central unloaded portion 4 and the outer peripheral unloaded portion 5 from the whole is a catalyst-loadedportion. The honeycomb filter can inhibit catalyst deterioration, occurrence of crack, and melting and raise regeneration efficiency.

## Description

### Background of the Invention and Related Art Statement

The present invention relates to a honeycomb filter. More particularly, the present invention relates to a honeycomb filter capable of inhibiting catalyst deterioration, occurrence of crack, and melting upon regeneration of the honeycomb filter and raising regeneration efficiency.

There is used a honeycomb filter of ceramic in order to trap dust and other particulate matter contained in an exhaust gas from automobiles, incineration exhaust gas generating upon incineration of waste, or the like. A diesel particulate filter (hereinbelow referred to as a "DPF") is used in order to effectively remove, particularly, particulate matter (hereinbelow sometimes referred to as "PM") such as soot discharged from an internal combustion engine.

Since the DPF is finally clogged unless trapped PM is removed, the filter needs regeneration. Regeneration of the filter can generally be performed by heating the DPF to combust PM. For example, there is a method where catalyst is loaded on the DPF to effectively combust PM with high temperature exhaust gas of a diesel engine. Thus, in the case that PM trapped by the DPF carrying a catalyst is removed by combustion with exhaust gas, there arise problems of catalyst deterioration, crack generation in a partition wall, and melting of a partition wall in the vicinity of an end portion (outlet side end portion) where exhaust gas flows out of a DPF.

In the case of loading a catalyst on a DPF, the catalyst is generally loaded on the whole partition walls. This enables effective combustion of PM over the whole DPF. However, this causes temperature rise from an end portion (inlet side end portion) on an exhaust gas inlet side toward an end portion (outlet side end portion) on an exhaust gas outlet side of the DPF. When temperature in the vicinity of the outlet side end portion of the DPF becomes excessively high, the aforementioned catalyst deterioration, crack generation in a partition wall, or the like, is caused.

To cope with this, there has been proposed a method to solve a problem of catalyst deterioration in the vicinity of the outlet side end portion of a filter by reducing an amount of a catalyst to be loaded or not loading a catalyst in the vicinity of the outlet side end portion (see JP-A-2003-154223).

By this conventional technique, the problem of catalyst deterioration in the vicinity of the outlet side end portion of a filter has been solved. However, it has a problem of insufficient regeneration efficiency when regeneration is repeated.

### Summary of the Invention

The present invention has been made in view of the above problems and aims to provide a honeycomb filter capable of inhibiting catalyst deterioration, occurrence of crack, melting, and improving regeneration efficiency.

In order to achieve the above aim, there is provided the following honeycomb filter according to the present invention.

[1] A honeycomb filter which comprises, partition walls separating and forming a plurality of cells extending in a direction of a central axis, and a catalyst loaded on the partition walls; wherein a region (central unloaded portion) extending from one end portion (outlet side end portion) in the direction of the central axis to at least 1/2 of length in the direction of the central axis in a central portion including the central axis but excluding its outer periphery is a catalyst-unloaded region, a region (outer peripheral unloaded portion) extending from the outlet side end portion to 2/3 or less of an average length of the central unloaded portion in the direction of the central axis in the region (outer peripheral portion) on the outer peripheral side excluding the central portion from the whole region thereof is a catalyst-unloaded region, and a portion excluding the central unloaded portion and the outer peripheral unloaded portion from the whole region thereof is a catalyst-loaded portion.

[2] A honeycomb filter according to [1], wherein the central portion is a cylindrical shape whose radius of a section perpendicular to the central axis in the central portion is 1/2 of a distance from the center to the outer periphery.

[3] A honeycomb filter according to [1], wherein the central portion is a prism shape having a square section perpendicular to the central axis with one side of the square section being 1/2 of a distance from the center to the outer periphery.

[4] A honeycomb filter according to [1], wherein the honeycomb filter comprises a plurality of segments including a segment constituting the outer periphery and a segment (central segment) not constituting the outer periphery and wherein said central portion is constituted by said central segment.

[5] A honeycomb filter according to any one of [1] to [4], wherein an amount of the catalyst loaded on the catalyst-unloaded region is 0 g/litter.

Since a predetermined range from the outlet side end portion in a central portion of a honeycomb filter is made a catalyst-unloaded region (central unloaded portion), a predetermined range from the outlet side end portion of the peripheral portion (region of 2/3 or less of average length in the central unloaded portion) is made a catalyst-unloaded region (outer peripheral unloaded portion), and the other remaining range is made a catalyst-loaded region; combustion of PM trapped in the catalyst-unloaded region is slow in comparison with the catalyst-loaded region. Accordingly, a heat generation amount per unit time decreases, and temperature rise canbe suppressed. Further, since the length of the outer peripheral unloaded portion is made as short as 2/3 or less of the length of the central unloaded portion, the combustion remainder of PM in an outer peripheral portion in the vicinity of the outlet side end portion is reduced, and lowering of regeneration efficiency can be suppressed. By these, catalyst deterioration, crack generation in a partition wall, and melting of a partition wall in the vicinity of the outlet side end portion can be suppressed, and regeneration efficiency can be raised when a honeycomb filter is regenerated.

### Brief Description of the Drawings

Figs. 1 are views schematically showing an embodiment of a honeycomb filter of the present invention. Fig. 1(a) is a cross-sectional view taken along a plane including the central axis, and Fig. 1(b) is a cross-sectional view taken along X-X' of Fig. 1(a).

Figs. 2 are views schematically showing another embodiment of a honeycomb filter of the present invention. Fig. 2(a) is a view taken along a plane including the central axis, and Fig. 2(b) is a cross-sectional view taken along Y-Y' of Fig. 2(a).

Fig. 3(a) is a cross-sectional view schematically showing a honeycomb filter of Example 2. Fig. 3(b) is a cross-sectional view taken along x-x' of Fig. 3(a) .

Fig. 4(a) is a cross-sectional view schematically showing a honeycomb filter of Example 3. Fig. 4(b) is a cross-sectional view taken along y-y' of Fig. 4(a).

Fig. 5(a) is a cross-sectional view schematically showing a honeycomb filter of Comparative Example 2. Fig. 5(b) is a cross-sectional view taken along z-z' of Fig. 5(a).

Fig. 6(a) is a cross-sectional view schematically showing positions where thermocouples are inserted in each of honeycomb filters of Examples and Comparative Examples. Fig. 6(b) is a cross-sectional view taken along w-w' of Fig. 6(a).

### Detailed Description of the Invention

A best mode (hereinbelow referred to as an "embodiment") for carrying out the invention will hereinbelow be described concretely. However, the present invention is by no means limited to the following embodiment, and it should be understood that modification, improvement, or the like, of a design can suitably be made on the basis of knowledge of those skilled in the art.

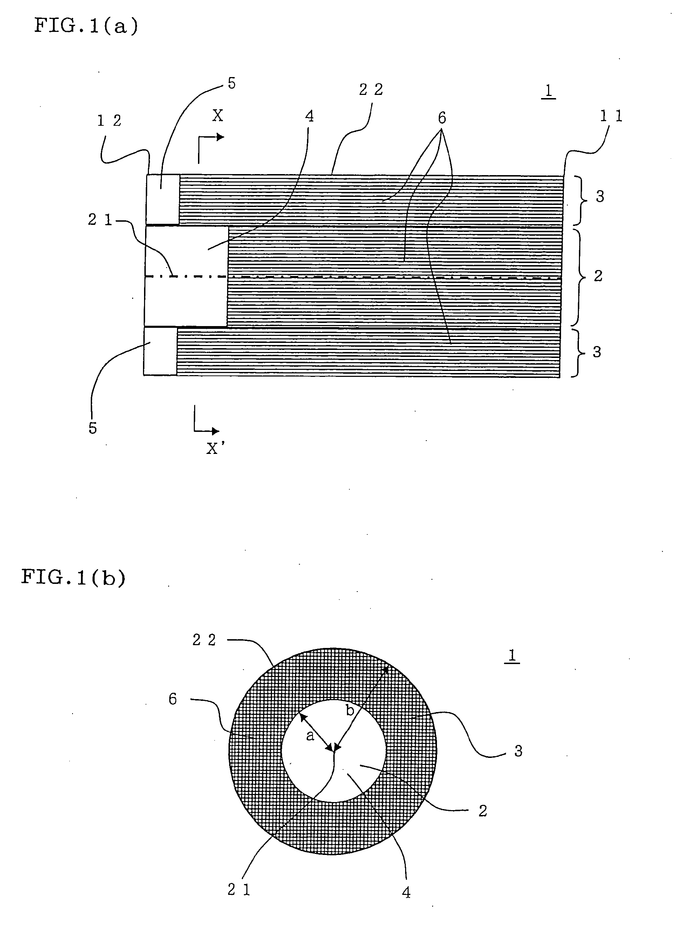

Fig. 1(a) is a cross-sectional view taken along a plane including the central axis of an embodiment of a honeycomb filter of the present invention. Fig. 1(b) is a cross-sectional view taken along X-X' of Fig. 1(a). That is, the X-X' cross-sectional view is a view showing a cross-section perpendicular to the axial direction of the honeycomb filter. In the honeycomb filter of the present embodiment, a catalyst is loaded on partition walls of a honeycomb structure provided with the partition walls separating and forming a plurality of cells extending in the axial direction A, and the outer peripheral wall is further arranged so as to surround the partition walls. As shown in Figs. 1(a) and 1(b), in the honeycomb filter 1 of the present embodiment, a region (central unloaded portion) 4 from one end portion (outlet side end portion) 12 in the direction of the central axis 21 to at least 1/2 of length in the direction of the central axis 21 in a central portion 2 including the central axis 21 and excluding an outer periphery 22 is a catalyst-unloaded region, a region (outer peripheral unloaded portion) 5 from the outlet side end portion 12 to 2/3 or less of average length of the central unloaded portion 4 in the direction of the central axis 21 in the region (outer peripheral portion) 3 on the outer peripheral side excluding the central portion 2 from the whole of the honeycomb filter 1 is a catalyst-unloaded region, and a portion excluding the central unloaded portion 4 and the outer peripheral unloaded portion 5 from the whole of the honeycomb filter 1 is a catalyst-loaded portion 6. Incidentally, a honeycomb filter 1 shown in Figs. 1(a) and 1(b) is constituted in such a manner that exhaust gas flows in from the inlet side end portion 11 and that treated gas is discharged from the outlet side end portion 12.

In a honeycomb filter of the present embodiment, as described above, since a predetermined range from the outlet side end portion in the central portion is made a catalyst-unloaded region (central unloaded portion), a predetermined range from the outlet side end portion of the peripheral portion (region of 2/3 or less of average length of the central unloaded portion) is made a catalyst-unloaded region (outer peripheral unloaded portion), and the other range is made a catalyst-loaded region; combustion of PM trapped in the catalyst-unloaded region is slow in comparison with the catalyst-loaded region. Accordingly, a heat generation amount per unit time decreases, and temperature rise canbe suppressed. Further, since the length of the outer peripheral unloaded portion is made as short as 2/3 or less of the length of the central unloaded portion, the combustion remainder of PM in a peripheral portion in the vicinity of the outlet side end portion is reduced, and deterioration in regeneration efficiency can be suppressed. By these, catalyst deterioration, crack generation in a partition wall, and melting of a partition wall in the vicinity of the outlet side end portion can be suppressed, and regeneration efficiency can be raised when the honeycomb filter is regenerated. In addition, by enhancing regeneration efficiency, pressure loss of the honeycomb filter after regeneration can be reduced, and thereby a regeneration interval can be made longer. Therefore, the number of regeneration can be reduced, and effect of elongating the life span of the filter is exhibited. Further, since a catalyst-unloaded portion is formed, amount of a catalyst noble metal to be used can be reduced, and thereby the cost for a honeycomb filter can be reduced.

### (Central unloaded portion)

As shown in Figs. 1(a) and 1(b), in a honeycomb filter 1 of the present embodiment, the central portion 2 is a cylindrical region having the central axis in the same position as the central axis 21 of the honeycomb filter 1 and does not include the outer periphery 22 of the honeycomb filter 1 in the region. In the central portion 2, when it is thus cylindrical, a radius (radius of the central portion) a of the bottom face (cross-section perpendicular to the centralaxis) is not particularly limited. However, itispreferable that the radius is 1/2 of the distance from the central axis 21 to the outer periphery 22 of the honeycomb filter 1. In Fig. 1(b), it is preferable that the radius is 1/2 of the radius (radius of outer periphery) **b** of the bottom face (cross-section perpendicular to the central axis) of the whole honeycomb filter 1. It is preferable that the bottom face of the central portion 2 is circular as described above. It is also preferable that the central portion has a prism shape having a square cross-section perpendicular to the central axis and that one side of the square cross-section is 1/2 of a distance from the center to the outer periphery. In addition, the cross-sectional shape of the central portion is not limited to these and may be an oval, a polygon such a quadrangle other than a square, or the like.

In the central portion 2, a region of a predetermined length from the outlet side end portion 12 side is the central unloaded portion 4, which is a catalyst-unloaded region. The length (the above predetermined length) in the direction of the central axis 21 of the central unloaded portion 4 is 1/2 of the length (the minimum length of the central unloaded portion) in the direction of the central axis 21 of the honeycomb filter 1. Therefore, the length of the central unloaded portion 4 in the direction of the central axis 21 is at least the minimum length of the central unloaded portion and may be the same as the length of the honeycomb filter 1 in the direction of the central axis 21. The case that the length of the central unloaded portion 4 in the direction of the central axis 21 is the same as the length of the honeycomb filter 1 in the direction of the central axis 21 is the case that the whole of the central portion 2 is a catalyst-unloaded region (central unloaded portion 4). This is effective in the case that thermal conductivity of a filter substrate is high or in the case that an amount of soot accumulation is high. In this case, the central portion 2 can be regenerated by the use of reaction heat due to a catalyst reaction in the catalyst-loaded region 6 in the outer peripheral portion 3. Thus, in a honeycomb filter 1 of the present embodiment, the length of the central unloaded portion 4 in the direction of the central axis 21 is the same as or more than the minimum length of the above central unloaded portion. Therefore, a heat generation amount per unit time at the outlet side end portion 12 decreases, thereby temperature rise can be suppressed. The length of the central unloaded portion 4 in the direction of the central axis 21 is preferably 2/3 or less of the length of the honeycomb filter 1 in the direction of the central axis 21 in the case that lowering of the maximum temperature upon regeneration by reducing a soot accumulation amount at the time of regeneration is required (improvement in durability) or in the case that thermal conductivity of the filter substrate is low.

The catalyst amount loaded on the catalyst-unloaded region is preferably 0 (g/liter).

Though an end portion (end face) on the inlet side end portion 11 side of the central unloaded portion 4 may be parallel to the cross-section perpendicular to the central axis 21, it may be inclined with respect to the cross-section, a curved face, or have a structure composed of a plurality of faces.

### (Outer peripheral unloaded portion)

As shown in Figs. 1(a) and 1(b), in a honeycomb filter 1 of the present embodiment, the outer peripheral portion 2 is a region on the outer periphery 22 side excluding the central portion 2 from the whole honeycomb filter 1. Therefore, the whole outer periphery 22 of the honeycomb filter 1 is included in the outer peripheral portion 2. The outer peripheral unloaded portion 5 is a region of 2/3 or less of the average length of the central unloaded portion 4 in the direction of the central axis 21 from the outlet side end portion 12 toward the inlet side end portion 11, which is a catalyst-unloaded region. Thus, since a length of the outer peripheral unloaded portion 5 is made to be as short as 2/3 or less of the average length of the central unloaded portion 4 in the direction of the central axis 21, the combustion remainder of PM in a peripheral portion 3 in the vicinity of the outlet side end portion 12 is reduced, and deterioration in regeneration efficiency can be suppressed. In addition, a length of the outer peripheral unloaded portion 5 is preferably 1/2 of the length of the central unloaded portion 4 in the case that the substrate of the honeycomb filter 1 has a low thermal conductivity. Here, the average length of the central unloaded portion 4 in the direction of the central axis 21 means a value obtained by dividing the volume of the central unloaded portion 4 by the cross-sectional area of a cross-section perpendicular to the direction of the central axis of the central unloaded portion 4. When the length of the central unloaded portion 4 in the direction of the central axis 21 or the length of the central unloaded portion 4 is simply referred, it means the average length in the direction of the central axis 21. In addition, the average length regarding the outer peripheral unloaded portion 5 can be defined in the same manner. When the length of the outer peripheral unloaded portion 5 in the direction of the central axis 21 or the length of the outer peripheral unloaded portion 5 is simply referred, it means the average length in the direction of the central axis 21.

Since a catalyst-unloaded region has a lower ventilation resistance and a lower heat capacity than a catalyst-loaded region, more soot is accumulated there than in a catalyst-loaded region, and temperature tends to rise upon regeneration. To cope with it, it is effective to coat the catalyst-unloaded region with fire resisting particles. The fire resisting particles may be the same material as the wash coat for catalyst loading.

### (Catalyst-loaded region)

In a honeycomb filter 1 of the present embodiment, a region excluding the central portion 2 and the outer peripheral portion 3 from the whole honeycomb filter 1 is the catalyst-loaded region 6. The honeycomb filter 1 is regenerated by a catalyst loaded on the catalyst-loaded region 6. A catalyst amount p in the catalyst-loaded region 6 is preferably 5 to 250 (g/liter), more preferably 10 to 100 (g/liter) . When it is more than 250 (g/liter), pressure loss is too high, and the cost is sometimes high. When it is less than 5 (g/liter), sometimes PM cannot be removed sufficiently by combustion. The catalyst loaded on the catalyst-loaded region 6 may be loaded uniformly on the partition walls. However, a different amount (g/litter) may be loaded depending on part. For example, the catalyst may be reduced gradually from the inlet side end portion 11 toward the outlet side end portion 12. By this, temperature rise on the side near the outlet side end portion can be suppressed.

### (Catalyst)

A catalyst loaded on the honeycomb filter 1 is not particularly limited as long as PM can be combusted by heat of exhaust gas. For example, an element selected from noble metal elements, elements belonging to the VIa group of the periodic table of elements, and elements belonging to the VIII group of the periodic table of elements can be loaded. Examples of the element include platinum (Pt), palladium (Pd), rhodium (Rh), nickel (Ni), cobalt (Co), molybdenum (Mo), tungsten (W), cerium (Ce), copper (Cu), vanadium (V), Iron (Fe), Gold (Au), and Silver (Ag). At least a simple element selected from these elements or a compound thereof canbe used. ANOx selective reduction type catalyst component or a NOx adsorber catalyst component may be loaded.

### (Material for honeycomb filter)

In a honeycomb filter of the present embodiment, a catalyst is loaded on a honeycomb structure provided with partition walls as described above. A material for the honeycomb structure among materials for a honeycomb filter is not particularly limited. However, from the viewpoint of strength and thermal resistance, it is preferable to use at least one kind selected from the group consisting of silicon carbide, silicon-silicon carbide based compound material, cordierite, silicon nitride, mullite, alumina, spinel, silicon carbide-cordierite based compound material, silicon-silicon carbide compound material, lithium aluminum silicate, aluminum titanate, and Fe-Cr-Al based metal. Of these, silicon carbide or silicon-silicon carbide based compound material is preferable.

In the case that a honeycomb filter is formed with silicon-silicon carbide as a material, a film of silicon dioxide is formed on a surface of silicon-silicon carbide. Since a melting point of silicon dioxide is higher than that of silicon, even in temperature of the honeycomb filter exceeds the melting point of silicon, melting of partition walls is inhibited by a surface protective film of silicon dioxide. In contrast, in the case that a catalyst contains dialuminum trioxide as a catalyst to be loaded is used, a film of silicon dioxide is destroyed by the reaction between the above silicon dioxide and the dialuminum trioxide, and silicon contained in silicon-silicon carbide is exposed on the surface. There arises a problem that silicon, which has a lower melting point, exposed on the surface is molten when temperature of the partition walls excessively rises to cause melting of partition walls. According to a honeycomb filter of the present embodiment, since temperature of partition walls is inhibited from rising excessively even in such a case, silicon can be protected from melting, and melting of partition walls can be avoided.

In the case that cordierite is used as the material, since cordierite naturally has a low melting point, melting of partition walls is sometimes caused. According to a honeycomb filter of the present embodiment, since temperature of partition walls is inhibited from rising excessively even when cordierite is used, cordierite can be protected from melting, and melting of partition walls can be avoided.

It is preferable that the material of a honeycomb structure constituting a honeycomb filter of the present embodiment is porous, and that it has an average pore diameter of 5 to 40 µm and a porosity of 30 to 85%. The average pore diameter is a value measured by a method of "the whole pore capacity and median pore diameter described in 6.3 of a test method M505-87 of an automobile exhaust gas purification catalyst ceramic monolith carrier of JASO automobile standard". The porosity is a value measured by a method of calculation from a pore capacity.

### (Shape or the like of honeycomb filter)

A shape, a size, or the like, of a honeycomb filter of the present embodiment is not particularly limited. As a shape, a cylindrical shape as shown in Figs. 1(a) and 1(b) is preferable. However, the shape may be a prism such as a rectangular prism or a column having an oval, a racetrack, or a deformed cross-sectional shape perpendicular to the axial direction.

### (Manufacturing method)

Next, a method for manufacturing a honeycomb filter of the present embodiment will be described. A honeycomb filter of the present embodiment can be obtained by kneading a predetermined forming material to prepare clay, forming the clay to manufacture a honeycomb-shaped formed body, drying the honeycomb-shaped formed body to manufacture a honeycomb formed body, firing the honeycomb formed body to manufacture a honeycomb structure, and loading a predetermined catalyst on a predetermined position of the honeycomb structure.

A method for preparing clay by kneading a forming material is not particularly limited, and, for example, a method using a kneader, a vacuum kneader, or the like, may be used. The predetermined forming material may suitably be selected according to a desired material.

As a method for manufacturing a honeycomb-shaped formed body, there is no limitation, and a conventionally known forming method such as extrusion forming, injection forming, and press forming can be used. Of all, a suitable example is a method of subjecting the clay prepared as described above to extrusion forming using a die having a desired outer peripheral wall thickness, partition wall thickness, and cell density.

There is no particular limitation on a drying method, and there can be employed a conventionally known method such as hot air drying, microwave drying, dielectric drying, reduced pressure drying, vacuum drying, and freeze drying. Of these, a drying method where hot air drying is combined with microwave drying or dielectric drying is preferable in that the whole formed body can be dried quickly and uniformly. Drying conditions can suitably be selected according to a shape, a material, or the like, of the honeycomb formed body.

A honeycomb formed body dried in the aforementioned method is fired in a firing furnace to manufacture a honeycomb structure. A firing furnace and firing conditions can suitably be selected according to a shape, a material, or the like, of the honeycomb formed body. Organic substances such as a binder may be removed by combustion by calcination before firing.

Next, a catalyst is loaded on the honeycomb structure. A desired catalyst is dispersed in a dispersion medium such as water to manufacture catalyst-loaded liquid. For example, in the case that catalyst is loaded in a state of a honeycomb filter 1 of the present embodiment shown in Figs. 1(a) and 1(b), for example, an end face of the outer peripheral portion 3 on the outlet side end portion 11 side is sealed in a doughnut-like state, and a predetermined length from the outlet end face 11 side is immersed in a catalyst-loaded liquid. This forms a catalyst-loaded region 6 in the central portion 2. Next, after the catalyst is once dried, the sealing on the end face in the outer peripheral portion 3 of the outlet side end portion 11 is removed, and a part of the central portion 2 on the same face is sealed. Then, by immersing a predetermined length from the outlet side end face 11 side in the catalyst-loaded liquid, a catalyst-loaded region 6 of the outer peripheral portion 3 is formed. Then, by drying the catalyst, a honeycomb filter 1 of the present embodiment can be obtained.

There may alternatively be employed a method where, before a catalyst is loaded, a water-repellent material such as resin is coated on a catalyst-unloaded region, a catalyst is loaded by the above method, the water-repellent material is removed by a thermal treatment, and the catalyst is baked. This enables uniform catalyst loading.

In addition, there may be employed a method where, when a honeycomb filter (honeycomb structure) is immersed in a catalyst-loaded liquid, the central axis of the honeycomb filter is inclined from the direction perpendicular to the liquid surface of the catalyst-loaded liquid to load the catalyst with rotating the honeycomb filter around the central axis during immersion. This forms at the outlet end side 12 a catalyst-unloaded region where an end portion on the inlet side end portion 11 side is formed in a conical shape.

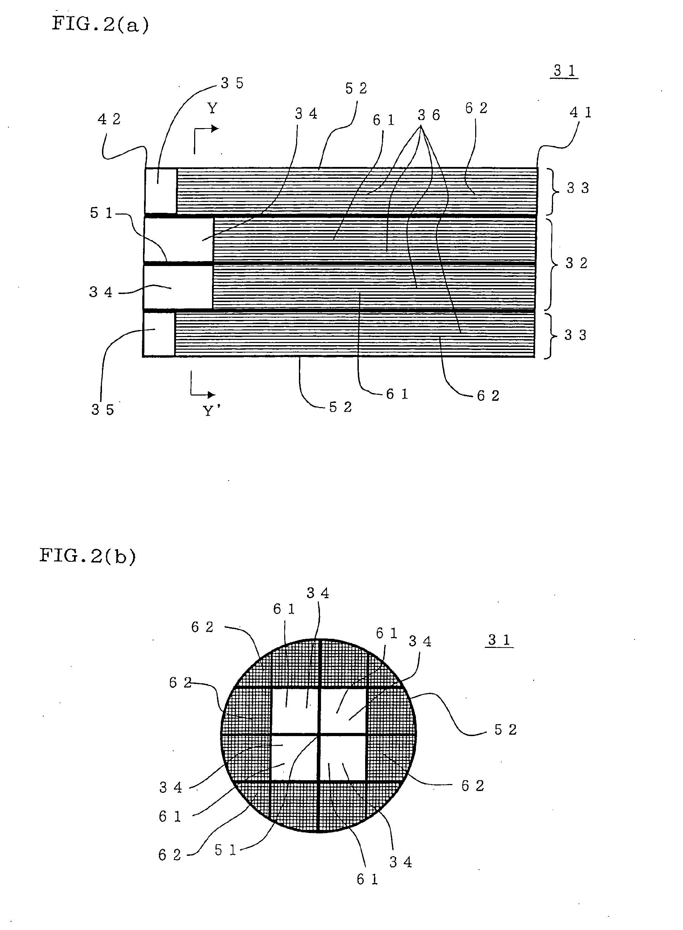

Next, another embodiment of a honeycomb filter of the present invention will hereinbelow be described. As shown in Figs. 2(a) and 2(b), the embodiment of a honeycomb filter of the present invention is constituted by a plurality of segments including a segment (outer peripheral segment) 62 constituting the outer periphery 52, a segment (central segment) 61 not constituting the outer periphery 52, and a central segment 61 constituting the central portion 32. Therefore, the central segment 61 includes the central axis 51 and functions as the central portion 32 excluding the outer periphery 52, and the region (central unloaded portion) 34 from the outlet side end portion 42 to at least 1/2 of length in the direction of the central axis 51 in the central segment 61 is a catalyst-unloaded region. Accordingly, the outer peripheral segments 62 on the outer peripheral side excluding the central segments 61 from the whole honeycomb filter 31 are the outer peripheral portion 33, and the region (outer peripheral unloaded portion) 35 from the outlet side end portion 42 to 2/3 or less of an average length of the central unloaded portion 34 in the direction of the central axis 51 of the outer peripheral segments 62 is a catalyst-unloaded region. The portion excluding the central unloaded portion 34 and the outer peripheral unloaded portion 35 from the whole honeycomb filter 31 is catalyst-loading region 36. Here, Fig. 2(a) is a cross-sectional view taken along a plane including the central axis of another embodiment of a honeycomb filter of the present invention, and Fig. 2 (b) is a cross-sectional view taken along Y-Y' of Fig. 2(a).

A honeycomb filter of the present embodiment is a honeycomb filter constituted from a plurality of segments as described above. Since the central segment and the outer peripheral segment satisfy the conditions similar to those of the central portion and the outer peripheral portion in the first embodiment of the present invention, regeneration efficiency upon regeneration can be improved as well as catalyst deterioration, crack generation of partition walls, and melting of partition walls can be suppressed.

In such a honeycomb filter formed by combining segments, it is preferable that a catalyst is loaded on each of the segments and that the segments are then combined to obtain a honeycomb filter. In addition, it is preferable that a catalyst is loaded on a segment functioning as the central segment so as to form a catalyst-unloaded region corresponding to the central unloaded portion. Further, it is preferable that a catalyst is loaded on a segment functioning as the outer peripheral segment so as to form a catalyst-unloaded region corresponding to the outer peripheral unloaded portion.

The number and size of segments constituting a honeycomb filter of the present embodiment are not particularly limited and can suitably be determined according to the size of the honeycomb filter. In addition, in a honeycomb filter of the present embodiment, each of the conditions regarding the central portion, outer peripheral portion, central unloaded portion, outer peripheral unloaded portion, and catalyst-loaded region is similar to the first embodiment of a honeycomb filter of the present invention described above.

The present invention will hereinbelow be described more specifically with Examples. However, the present invention is by no means limited to these Examples.

### (Example 1)

There was manufactured a honeycomb filter composed of 16 (4 × 4) segments and having a central portion formed by four quadratic prism-shaped segments as shown in Figs. 2(a) and 2(b).

As a forming material, SiC powder and metal Si powder were mixed at a mass ratio of 80 : 20 to give a mixture. To the mixture were added starch and foaming resin as pore formers and further added methyl cellulose, hydroxypropoxylmethyl cellulose, a surfactant, and water to obtain clay having plasticity.

The obtained clay was subjected to extrusion forming to obtain 16 segments constituting a honeycomb filter shown in Figs. 2(a) and 2(b). For each segment, extrusion forming was performed using a die which gives a cell structure of 12 mil / 300 cpsi ("0.3 mm" / "46.5 cells / cm²"). The honeycomb-shaped segments were dried and fired to obtain honeycomb segments.

Next, a catalyst was loaded on the honeycomb segments and dried. The catalyst used was alumina, platinum, and ceria. The total amount of the catalyst loaded on the catalyst-loaded region was 50 g/liter. The mass ratio of alumina, platinum, and ceria was made to be alumina : platinum : ceria = 8 : 1.7 : 2. The catalyst was loaded in the range of 70% of the whole length (length in the direction of the central axis) from the inlet side end portion of each of the four quadratic prism-shaped segments constituting the central portion. This made the segments for the central portion have a central unloaded portion in the range of 30% of the whole length of the outlet side end portion. The catalyst was loaded in the range of 85% of the whole length (length from the direction of the central axis) from the inlet side endportion of the 12 segments constituting the outer peripheral portion. This made the segments for the outer peripheral portion have an outer peripheral unloaded portion in the range of 15% of the whole length of the outlet side end portion. This corresponds to 50% of the length of the central unloaded portion.

Next, a paste cement material was applied on an outer peripheral face of each of the 16 segments where the catalyst was loaded. The 16 segments were arranged to be 4×4 to join to obtain a honeycomb segment joined body. Next, the honeycomb segment joined body was pressed from four directions, and then the cement material was dried. After the cement material was dried, the honeycomb segment joined body was subjected to grinding so as to have a cylindrical shape. Then, the outer peripheral face was coated with a coating material and dried to obtain a cylindrical honeycomb filter shown in Figs. 2 (a) and 2 (b) . The size of the whole honeycomb filter was 144 mmφ × 254 mmL (length).

### (Example 2)

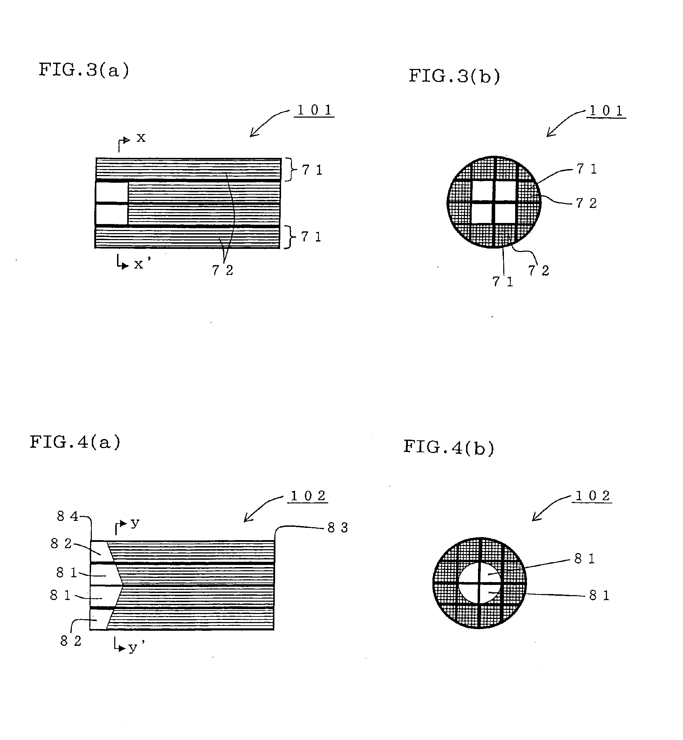

As shown in Figs. 3(a) and 3(b), the catalyst was loaded on the whole honeycomb segments (100% of the whole length) lest the outer peripheral unloaded portion therein should be formed when the catalyst is loaded on the 12 segments (outer peripheral segments) 72 constituting the outer peripheral portion 71. Except for this, a honeycomb filter 101 was obtained in the same manner as in Example
1. Fig. 3(a) is a cross-sectional view schematically showing a honeycomb filterof Example 2, and Fig. 3(b) is ax-x' cross-sectional view of Fig. 3(a).

### (Example 3)

After 16 honeycomb segments were obtained by firing as in Example 1, before the catalyst was loaded on each honeycomb segment, 16 honeycomb segments were joined to obtain a cylindrical honeycomb structure. After that, when the honeycomb structure is immersed in catalyst-loaded liquid, the central axis of the honeycomb structure is inclined from the direction perpendicular to the liquid surface of the catalyst-loaded liquid to load the catalyst with rotating the honeycomb filter around the central axis during immersion to give a honeycomb filter 102. This forms the end face on the inlet side end portion 83 side in a conical shape in a catalyst-unloaded region including the central unloaded portion 81 and the outer peripheral unloaded portion 82 as shown in Figs. 4(a) and 4(b). The apex of the cone on the end face side formed in a conical shape of the catalyst-unloaded region was located at the site of 30% of the whole length from the outlet side end portion 84. The average length of the outer peripheral unloaded portion 82 of the central unloaded portion 81 was formed to be 2/3 of the average length of the central unloaded portion 81. Fig. 4(a) is a cross-sectional view schematically showing a honeycomb filter of Example 3, and Fig. 4(b) is a cross-sectional view taken along y-y' of Fig. 4(a).

### (Comparative Example 1)

A honeycomb filter was obtained in the same manner as in Example 1 except that the catalyst was loaded on the whole partition walls of each of the 16 honeycomb segment. The amount of the catalyst loaded was 206 g (50 g/liter) in total.

### (Comparative Example 2)

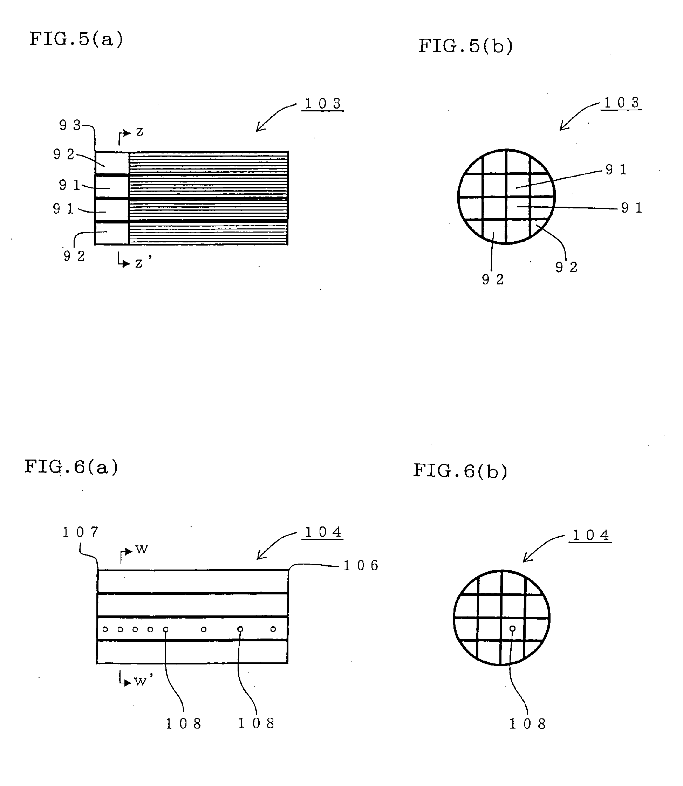

A honeycomb filter 103 was obtained in the same manner as in Example 1 except that the range of 30% of the whole length from the outlet side end portion 93 is made to be the catalyst-unloaded region (central unloaded portion 91 and outer peripheral unloaded portion 92) with respect for all the 16 segments as shown in Figs. 5(a) and 5(b). The amount of the catalyst was 144 g (50 g/liter) in total. Fig. 5(a) is a cross-sectional view schematically showing a honeycomb filter of Comparative Example 2, and Fig. 5(b) is a cross-sectional view taken along z-z' of Fig. 5(a).

### (Maximum temperature upon regeneration)

With respect to each of the honeycomb filters in Examples 1 to 3 and Comparative Examples 1, 2, the maximum temperature upon regeneration was measured under the following conditions. The results are shown in Table 1.

In the honeycomb filter was accumulated 8 g/liter of soot in advance, and post injection was put in the condition of 2000 rpm × 50 Nm using a 2.0 liter engine to raise engine exhaust gas temperature. When the accumulated soot started burning to lower the pressure loss of the honeycomb filter, the condition was shifted to an idle state. Since the shifting to an idle state raises oxygen concentration and flow rate of low temperature gas having cooling effect, temperature inside the honeycomb filter sharply rises. As shown in Figs. 6(a) and 6(b), thermocouples 108 were inserted into the honeycomb filter 104 in five positions in a half region on the outlet side end portion 107 side and three positions in a half region of the inlet side end portion 106 side to measure the maximum temperature upon regeneration. The temperature of the thermocouple which recorded the highest temperature during the measurement time was defined as the highest temperature. Fig. 6(a) is a cross-sectional view schematically showing positions where thermocouples are inserted in each of honeycomb filters of Examples and Comparative Examples. Fig. 6(b) is a cross-sectional view taken along w-w' of Fig. 6(a).

### (Regeneration efficiency)

In a honeycomb filter, 8 g/liter of soot was permitted to accumulate in advance, and post injection was put in the condition of 2000 rpm × 50 Nm using a 2.0 liter engine to raise engine exhaust gas temperature. The state was maintained for 10 minutes. Then, the post injection was made to be mist, and the engine was stopped. The amount of soot accumulated in the honeycomb filter was measured, and regeneration effect from soot was calculated. The soot accumulation amount after the test was deducted from the soot amount (8 g/liter) before the test, and the value obtained was divided by the volume before the test and multiplied by 100 to give soot regeneration efficiency (mass %). In addition, the above operation was repeated 10 times, and regeneration efficiency in tenth regeneration operation (tenth regeneration efficiency) was calculated.

**Table 1**

| | Maximum temperature upon regeneration | | Regeneration efficiency | | Tenth regeneration efficiency | |
|---|---|---|---|---|---|---|
| | Maximum temperature | Relative reduced amount | Regeneration efficiency on efficiency | Relative reduced amount | Regeneration efficiency on efficiency | Relative reduced amount |
| | °C | °C | Mass % | Mass % | Mass % | Mass % |
| Example 1 | 941 | 111 | 94 | 4 | 92 | 4 |
| Example 2 | 945 | 107 | 86 | 12 | 82 | 14 |
| Example 3 | 949 | 103 | 90 | 8 | 83 | 13 |
| Conp.Ex.1 1 | 1052 | - | 98 | - | 96 | - |
| Comp. Ex 2 | 943 | 109 | 72 | 26 | 61 | 35 |

In Table 1, "relative reduced amount" in each of the test results (maximum temperature upon regeneration, regeneration efficiency, and tenth regeneration efficiency) shows differences from the results of Comparative Example 1, where a catalyst is loaded on the whole honeycomb filter. For example, in "maximum temperature upon regeneration", the "reduced amount" of Example 1 is a value (111°C) obtained by deducting the "maximum temperature 941°C" of Example 1 from the "maximum temperature 1052°C" of Comparative Example 1.

From Table 1, it is understood that the "maximum temperature upon regeneration" can be reduced by 100°C or more in a honeycomb filter of each of Examples 1 to 3 and Comparative Example 2 in comparison with Comparative Example 1, where a catalyst is loaded on the whole honeycomb filter. In addition, it was confirmed that there is little influence on the maximum temperature even if catalyst loaded conditions of the outer peripheral segment is different since the maximum temperature is generated in the vicinity of the outlet side end portion of the central segment.

From Table 1, it is understood that regeneration efficiency is reduced by 26 mass% in the case of Comparative Example 2 when Comparative Example 1 and Comparative Example 2 are compared with each other with respect to "regeneration efficiency". This is considered to be because a catalyst is not loaded in the vicinity of the outlet side end portion of the honeycomb filter of Comparative Example 2, and temperature hardly rises in the outer peripheral portion since gas temperature is low upon regeneration, thereby almost all the soot in the vicinity of the outlet side end portion of the outer peripheral segment remains without burning. On the contrary, deterioration of regeneration efficiency in each of the honeycomb filters in Examples 1 and 2 was small in comparison with Comparative Example 2 since a catalyst was loaded up to the site nearer to the vicinity of the outlet side end portion in the outer peripheral portion though the central unloaded portion is the same as in the case of Comparative Example 2.

From Table 1, it is understood that "tenth regeneration efficiency" of the honeycomb filter of Comparative Example 2 is further deteriorated. This is considered that deterioration of regeneration efficiency proceeded by further accumulation of soot in a portion where soot in the peripheral portion remained without burning during in the course of the repeated regeneration operation. In contrast, it is understood that the honeycomb filters of Examples 1 to 3 do not have large deterioration in regeneration efficiency. This is considered that amount of soot remaining without burning in the vicinity of the outlet side end portion in the outer peripheral portion is small after regeneration even if regeneration operation is repeated.

From the above, it is understood that each of the honeycomb filters in Examples 1 to 3 has high regeneration efficiency in comparison with Comparative Example 2 though reduction in the maximum temperature upon regeneration is in about the same degree and that the difference further increases as regeneration is repeated.

### Industrial Applicability

The present invention can be used to trap dust and the other particulate matter contained in automobile exhaust gas, incineration exhaust gas generated upon incineration of waste, or the like; can suppress catalyst deterioration, crack generation of partition walls, and melting of partition walls; and can be regenerated at higher regeneration efficiency.

## Claims

1. A honeycomb filter comprising:
partition walls separating and forming a plurality of cells extending in a direction of a central axis, and
a catalyst loaded on the partition wall;
wherein a region (central unloaded portion) extending from one end portion (outlet side end portion) in the direction of the central axis to at least 1/2 of length in the direction of the central axis in a central portion including the central axis but excluding an outer periphery is a catalyst-unloaded region,
a region (outer peripheral unloaded portion) extending from the outlet side end portion to 2/3 or less of average length of the central unloaded portion in the direction of the central axis in the region (outer peripheral portion) on the outer peripheral side excluding the central portion from a whole region thereof is a catalyst-unloaded region, and
a portion excluding the central unloaded portion and the outer peripheral unloaded portion from the whole region thereof is a catalyst-loaded portion.

2. A honeycomb filter according to Claim 1, wherein the central portion is a cylindrical shape whose radius of a cross-section perpendicular to the central axis in the central portion is 1/2 of a distance from the center to the outer periphery.

3. A honeycomb filter according to Claim 1, wherein the central portion is a prism shape having a square cross-section perpendicular to the central axis with one side of the square cross-section being 1/2 of a distance from the center to the outer periphery.

4. A honeycomb filter according to Claim 1, wherein the honeycomb filter comprises a plurality of segments including a segment constituting the outer periphery and a segment (central segment) not constituting the outer periphery and wherein said central portion is constituted by said central segment.

5. A honeycomb filter according to any one of Claims 1 to 4, wherein an amount of the catalyst loaded on the catalyst-unloaded region is 0 g/liter.
